# EUROPEAN PATENT APPLICATION

(11) **EP 1 008 436 A2**
(43) Date of publication of application: **14.06.2000**
(21) Application number: 99309481.2
(22) Date of filing: 26.11.1999
(51) Int. Cl.: B29C 70/44, B29C 33/04

(54) **Method and apparatus for manufacturing articles from thermoplastic material**

(30) Priority: 27.11.1998 GB 9825912
(71) Applicant: Ex-press Plastics Limited, Loddon, Norfolk IP14 6JL (GB)
(72) Inventor: Brown, David William, Loddon, Norfolk NR14 6JL (GB)
(74) Representative: Cowan, David Robert

(57) **Abstract**

Articles are manufactured from thermoplastic material (17) by applying the material in the form of fibres to a mould surface (10A). Flexible sheet material (18) is then applied to the thermoplastic material and air is withdrawn from between the mould surface and the flexible sheet. The mould is then heated by passing fluid adjacent the mould so that the thermoplastic melts and conforms to the shape of the mould. The mould is then cooled by applying cooling fluid to the mould so that the thermoplastic material sets and conforms to the shape of the mould. When solidified the sheet and the moulded article are removed from the mould.

## Description

This invention relates to a method and apparatus for manufacturing articles from thermoplastic material.

Hitherto the manufacture of articles from thermoplastic material has involved the production of expensive tooling or has been relatively slow and time consuming.

In GB-A-2310822 there is disclosed making articles from thermoplastics material in which the material is thermoplastic fabric material which is laid on a mould, pressure is applied to the material and the material is heated to melt the thermoplastic material. The material is then cooled. Heat is applied directly to the thermoplastic material by infra-red, microwave, radio frequency or induction heating. Pressure may be applied by vacuum bag or autoclave.

An object of the invention is to provide a method and apparatus for manufacturing articles from thermoplastic material which is cost effective and which is capable of volume production.

According to the invention there is provided a method of manufacturing articles from thermoplastic material comprising the steps of laying thermoplastic material over the surfaces of a mould, placing a flexible cover over the thermoplastic material, withdrawing air from the space between the mould surface and the cover to create a vacuum in said space, heating the mould surface to a temperature sufficient to cause the thermoplastic material to become plastic and to be moulded on to the mould surface, cooling the mould surface to cause the thermoplastic material to cool and solidify in the shape of the mould surface, and removing the flexible cover and the moulded plastic article from said surface, heating and cooling of the mould surface being achieved by circulating fluid over the mould to the rear of the mould surface.

Preferably the mould is associated with a jacket at the rear of said surface through which the fluid for heating and cooling the surface is circulated.

The fluid may be arranged to be in communication with heating means for heating the fluid and in communication with cooling means for cooling fluid to be circulated through the jacket. Control means may be provided for selectively passing fluid for cooling or fluid for heating the mould surface according to the stage of the manufacturing cycle.

Oil is the preferred fluid for effecting cooling and heating of the mould surface.

Preferably the jacket comprises distribution means for distributing fluid evenly throughout the jacket during the heating and cooling stages. Such distribution means conveniently includes a pipe or pipes within the jacket having a plurality of outlet openings in the pipe or pipes from which fluid is distributed throughout the jacket. The pipe may comprise a continuous, serpentine pipe, closed at one end and connected at the other end with the sources of hot and cold fluid. Alternatively the pipes may be an array of pipes communicating with a common manifold.

The fluid may be kept at an elevated pressure acting on the mould typically less than 0.5 bar and preferably in the range of 0.1-0.5 bar, to avoid distortion of the mould or oil jacket and to minimise leaks, or the potential for leaks.

The thermoplastic material may be a thermoplastic composite fabric, conveniently glass fibre or carbon fibre combined with thermoplastic fibre, the fibres being associated with one another and in the form of sheet material which is flexible and when laid out onto the mould surface conforms to the shape of said surface. When the surface is heated the thermoplastic component of the material melts and becomes shaped according to the mould surface, according to the article required. The thermoplastic material is preferably polypropylene, polycarbonate, PBT, polyester or nylon. In one composition there is 60% glass fibre to 40% polypropylene. Suitable material is sold under the trade mark Twintex supplied by Vetrotex International which is a woven, drapeable fabric. Alternatively the material may be thermoplastic fibre on its own.

The flexible cover is preferably rubber sheet, plastics sheet or other flexible material which upon creating the vacuum presses down on the thermoplastics material to cause it to bear on the mould surface and conform to the shape of the mould surface.

The mould surface is conveniently an electroformed, vapour deposited, cast, sprayed or fabricated from metal material in the form of a metal shell mould, preferably of nickel made by conventional electroforming techniques.

By such means a conductive, relatively thin sheet of material is formed of the required shape and which conducts heat from the fluid to the thermoplastic material.

Electroformed sheet is relatively easy to form into the desired shape ofthe article without the need for an expensive mould tool.

According to another aspect of the invention apparatus for manufacturing articles from thermoplastic material comprises a mould having a surface, a flexible cover arranged for placing over the mould surface with thermoplastic material located between the surface and the cover, a jacket for fluid to the rear of the mould surface and arranged to receive fluid for heating and cooling the mould surface and the thermoplastic material, and a source of hot fluid and of cooling fluid communicating with the jacket.

Conveniently the mould surface is defined by an electroformed metal member arranged to transmit heat from fluid in the jacket to the thermoplastic material.

Preferably the jacket for fluid includes distribution means for distributing fluid, for example oil, throughout the jacket to achieve an even temperature of fluid in the jacket. The distribution means may include pipes extending through the jacket and having a plurality of outlet openings.

Further features of the invention will appear from the following description of an embodiment of the invention given by way of example only and with reference to the drawings, in which:
Fig 1 is a schematic section through moulding apparatus,
Fig 2 is a schematic diagram of a fluid circulation system,
Fig 3 is a section through a mould showing distribution of fluid over the mould,
Fig 4 is a perspective view of a jacket with the mould omitted,
Fig 5 is a schematic plan view of one form of fluid distribution arrangement,
Fig 6 is a schematic plan view of another form of fluid distribution arrangement, and
Fig 7 is a schematic view of a four mould moulding layout.

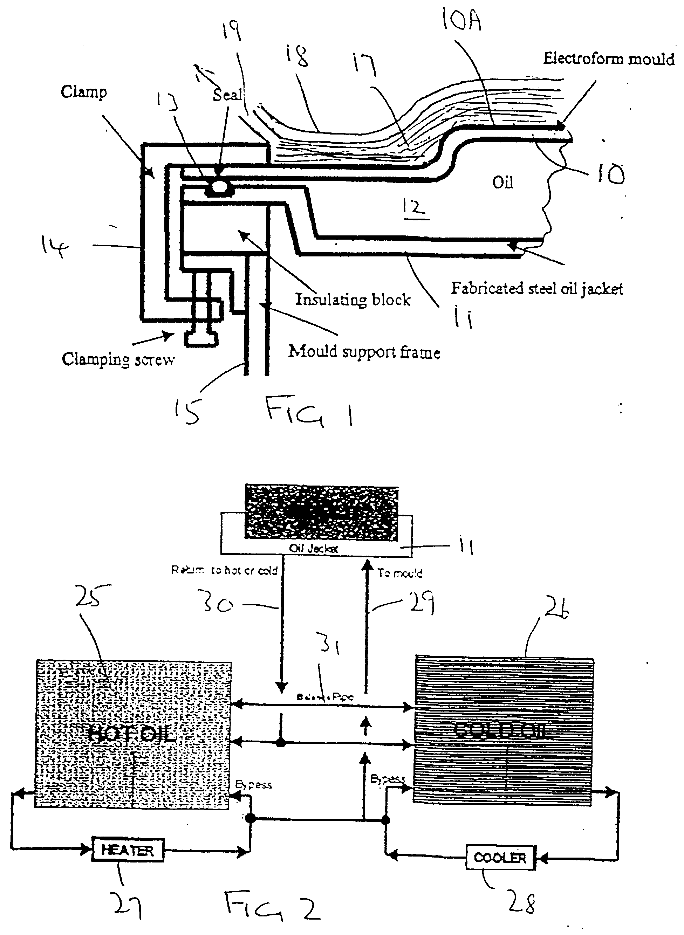

Referring to the drawings and firstly to Fig 1 there is shown a part section through apparatus for moulding thermoplastic material to form an article.

The apparatus comprises a mould 10 which in this case is an electroformed shell mould usually formed from nickel by known means in which the metal is plated onto a disposable mandrel. The electroformed metal reproduces the surface on which it is plated and is simple to make and provides a possibility of making true, accurate compound curve shapes ideal for moulded plastic designs including polished and textured surfaces. It should have a reasonably consistent thickness suitable for most applications. Nickel is usually chosen as the electroform material since it is easy to electroform, is corrosion resistant and ductile. However moulds of fabricated steel or aluminium could also be used.

The mould 10 presents a mould surface 10A in an upward direction and beneath the mould is formed a jacket 11 spaced from the mould to define a circulation space 12 for circulation fluid, preferably oil, for heating and cooling the mould 10, as will be described.

The space 12 is sealed by sealing means 13 and there is clamping means 14 for clamping the mould 10 against the sealing means 13. The mould 10 is supported by a mould support frame 15.

In use thermoplastic material 17, usually in the form of drapeable woven material including glass fibre and fibres of thermoplastic material, is laid on to and sealed against the surface 10A. Then a sheet of flexible rubber or plastics 18 is placed over the thermoplastics material 17. Air is drawn out from the space between the mould surface 10A and the sheet 18 through an outlet 19 by pump means (not shown) whereby the sheet is vacuum sealed against the surface and the space is placed under vacuum and the sheet 18 moves towards the mould surface 10A pressing the material 17 against said surface. The sheet 18 may be of silicon rubber and reusable or nylon sheet film may be used.

Hot oil is introduced into the space 12 defined by the jacket 11 and is distributed throughout the space 12 to heat the mould 10. This heat is transmitted through the mould in to the thermoplastic material 17 to cause the thermoplastic material to become plastic or melt when the temperature reaches the required level which, when moulding with polypropylene, may be in the region of 180°C.

This temperature is held for a few minutes to enable the thermoplastic to fully conform to the shape of the mould surface 10A while in the plastic state.

Once melting or plastic deformation has occurred the thermoplastic material needs to be cooled to solidify the material and enable the resulting article to be removed from the mould. This is achieved by circulating cool oil through the jacket spacel2 and cooling continues until the material 17 has reached a sufficiently cool temperature for removal of the sheet 18 and of the resulting solidified article. Thereafter the mould surface 10 is cleaned and the process is repeated. In cooling, the cooling action may be in two or more phases, including an initial phase to a temperature below the melting temperature, for example 140°c for polypropylene, at which temperature the coolant is held, for example for a few minutes, then cooling is continued. This has been found to achieve more consistent cooling through the thickness of the thermoplastic material.

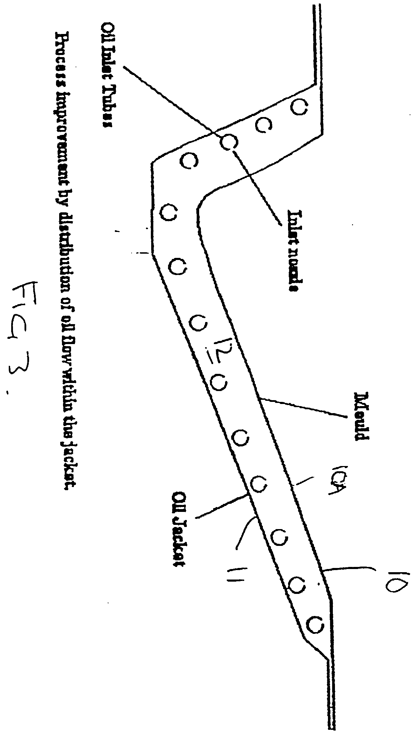

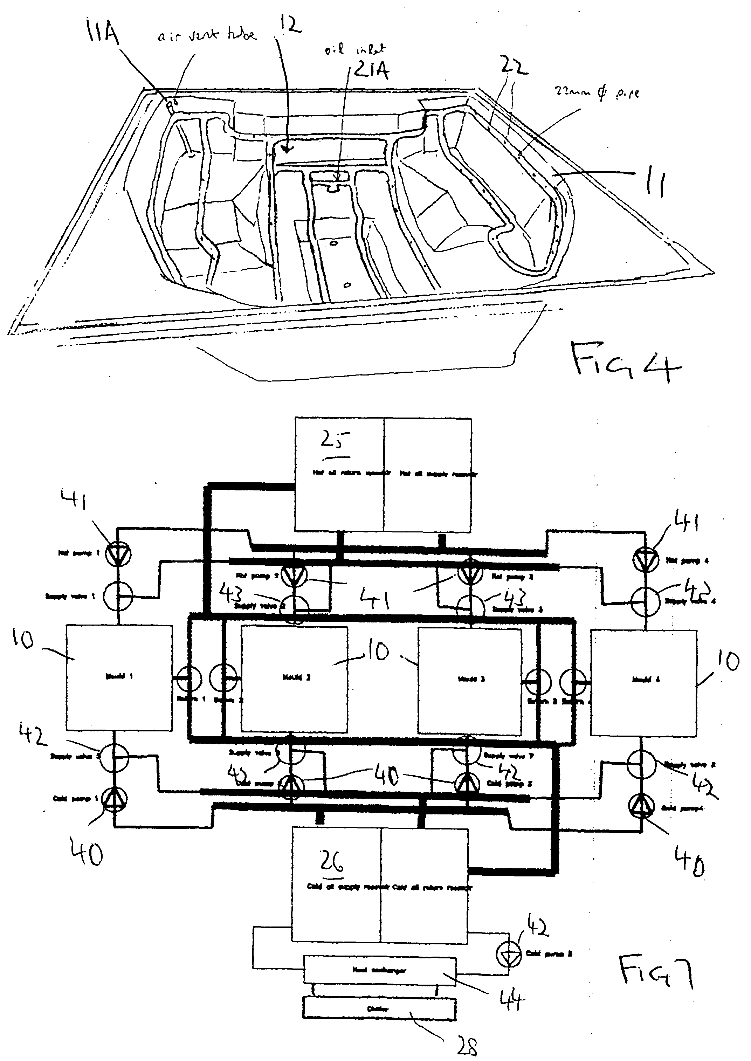

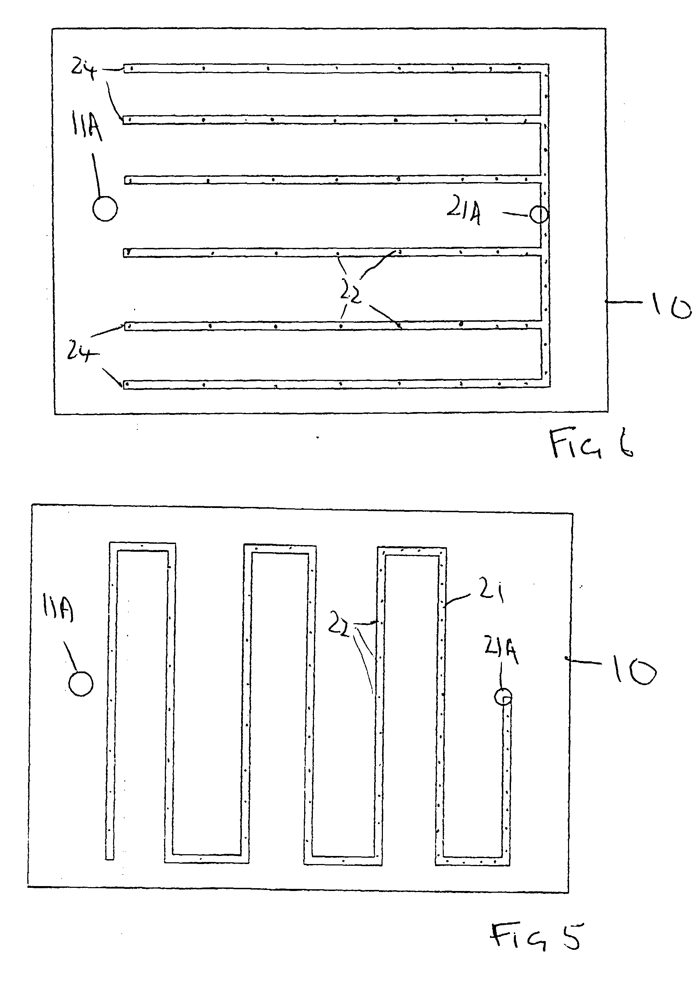

It has been found that quicker cycle times can be achieved if the fluid in the space 12 is distributed quickly to all parts of the space 12. Referring to Figs 3-6 distribution can be achieved by providing a pipe 21 having a plurality of outlet openings 22 distributed along its length through which the fluid is discharged in to the space 12. The pipe 21 may extend in a serpentine manner throughout the space 12 and adjacent a wall of the jacket 11 (Fig 5). The pipe 21 has an inlet 21A for the fluid at one end and is closed at the opposite end.

Fig 4 shows fluid distribution pipework located within a jacket space 12 of a jacket 11 having an inlet 21A and having various fluid outlets 22 along its length. An outlet for venting air from the jacket is provided at 11A in the upper part of the jacket 11.

Alternatively a plurality of pipes 21 may be provided each communicating with a manifold 23 which extends along the jacket 11 and the pipes 21 each having spaced outlets 22 and being closed at their ends 24 remote from the manifold (Fig 6). In each case by having the pipe or pipes 21 extending throughout the space 12 the hot or cold fluid entering the space 12 quickly ensures that the fluid in the space circulates and reaches the required temperature quickly without creating hot or cold spots over the mould 10.

By this means the cycle time of heating and cooling the mould 10 is significantly reduced thereby increasing the rate of manufacture of the articles.

Referring now to Fig 2 there is shown an arrangement for supplying hot and cold fluid, in this case oil, to the jacket 11. Reservoirs of hot and cold oil 25 and 26 are provided having a heater 27 for the hot oil reservoir 25 and a cooler 28 for the cold oil reservoir 26.

An oil supply pipe 29 communicates with the space 12 of the jacket 11 to feed oil to the space 12 and there is a return pipe 30 for returning oil from the space 12. The supply and return pipes 29 and 30 are selectively connectable to the reservoirs 25 and 26 according to whether hot or cold oil is required. Suitable control means (not shown) are provided for this purpose. A balance pipe 31 is connected between the reservoirs 25 and 26.

Referring to Fig 7 there is shown an arrangement in which four moulds 10 are provided giving a four station moulding machine utilising a common heating and cooling oil distribution system. The arrangement allows for up to four moulds to be operated independently from one another, if required, or the operation of a smaller number of large moulds, limited only by the thermal mass of the system and the desired cycle time. Each mould 10 includes pumps 40 for supplying cooling fluid to each mould, pumps 41 for supplying heating fluid for each mould and associated valves 42, 43 respectively. There is a common cooler 28 for the fluid to the moulds and an associated heat exchanger 44. There is also a common heater 27 for the moulds. Pipework supplies heating and cooling oil to the moulds 10 and there is return pipework for returning oil to the respective heater 27 or cooler 28.

The arrangement is suitable for the manufacture of articles by batch manufacturing.

By these arrangements it is possible to mould articles in thermoplastics material using a relatively cheap mould in a relatively short cycle time giving significant improvement in productivity compared with prior methods.

Briefly the processing cycle includes the following stages;
1. The thermoplastic fabric material 17 is draped on to the cold mould surface 10A after cleaning the mould.
2. The material 17 is covered with a reusable silicone rubber sheet 18.
3. The vacuum pump is operated to evacuate air from between the sheet 18 and the mould surface 10A.
4. The mould 10 is heated to melt the thermoplastic material and allow it to flow by the introduction of hot oil into the space 12.
5. The heat is held for a few minutes, for example 5 to 10 minutes, for consolidation of the material 17 due to the pressure applied by the sheet 18.
6. The mould 10 is cooled until the thermoplastic material has solidified, typically to 70°c to 80 °c but with a short pause at a higher temperature of about 140°c.
7. The rubber sheet 18 is removed.
8. When the temperature of the material 17 is below the heat distortion temperature and the moulded article is safe to handle it is extracted from the mould.
9. The mould 10 is cleaned for starting the next cycle.

To improve insulation and loss of heat from the oil the lower surface of the jacket 11 may be insulated together with the supply and return pipes 29 and 30. To ensure that the correct temperatures are reached temperature sensing means may be provided in the jacket 11.

The invention also provides for the possibility of coating the finished articles to give a surface finish and colour to match the requirements for the article. When the coating arrangement is to be used the sequence is as follows:
A. The mould surface 10A is cleaned and the flange at the edge of the mould is masked.
B. Paint is applied to the mould surface by means of spraying apparatus or by electrostatic spray of a powder on the surface. Preferably, there is applied a polyester or acrylic paint powder to the surface to give improved properties to the surface finish.
C. The mould is heated rapidly to melt and cure the paint, for example when using polyester paint the mould is heated to 200°c for 5-10 minutes.
D. The mould is then cooled to solidify the paint layer and during cooling a second application of paint may be made to act as an adhesion promoter. The composition of this application when employing polyester paint on a polypropylene article is typically 50% polyester paint and 50% polypropylene powder.
E. The thermoplastic fabric material 17 is then applied to the mould surface 10A covering the paint layers.
F. The fabric material is then covered with the sheet material 18 and vacuum is applied to evacuate air from between the sheet 18 and the mould surface.
G. The mould is then heated to a temperature high enough to allow the thermoplastic material to melt and flow. When moulding with polypropylene the mould is heated to about 200°c and the temperature is held for 5-10 minutes.
H. The mould is then cooled to a temperature suitable for release of the moulded article, typically 70-80°c with a pause in cooling at about 140°c to allow the cooling rate to be controlled.

The resulting moulded article then has a layer or coating on its surface comprising the paint applied to the mould.

Motorised valves for controlling the supply of hot or cold oil through the jacket may also be provided.

A low pressure of oil in the jacket 11 acting on the mould is required to prevent risks of leakage and a suitable pressure would be 0.1 bar or up to 0.5 bar. Higher pressures are to be avoided due to the possible leakage of hot oil. However higher pressures will be present in the pipework.

The mould can be changed by releasing the mould 10 from the jacket 11 by release of the clamping means 14 after emptying the jacket 11.

By using glass fibre in association with thermoplastic fibres articles may be produced which are very strong but also recyclable. The use of polypropylene gives particularly useful advantages. It is also possible to apply colour to the surface of the article, if required, as described.

The resulting article is an improvement over conventional glass reinforced thermoplastics and over conventional injection moulding techniques. The apparatus is relatively cheap, production rates are relatively high and the resulting articles are very strong and durable.

## Claims

1. A method of manufacturing articles from thermoplastic material comprising the steps of laying thermoplastic material (17) over the surface (10A) of a mould (10), placing a flexible cover (18) over the thermoplastic material, withdrawing air from the space between the mould surface (10A) and the cover (18) to create a vacuum in said space, heating the mould surface (10A) to a temperature sufficient to cause the thermoplastic material (17) to become plastic and to be moulded on to the mould surface, cooling the mould surface to cause the thermoplastic material to cool and solidify in the shape of the mould surface, and removing the flexible cover (18) and the moulded plastic article from said surface, heating and cooling of the mould surface being achieved by circulating fluid over the mould (10) to the rear of the mould surface.

2. A method according to claim 1 wherein the mould is associated with a jacket (11) at the rear of said surface (10A) through which fluid for heating and cooling the surface is circulated.

3. A method according to claim 2 wherein the heating and cooling fluid is arranged to be in communication with heating means (27) for heating the fluid and in communication with cooling means (28) for cooling the fluid to be circulated through the jacket (11).

4. A method according to any one of the preceding claims wherein control means is arranged for selectively passing fluid for cooling or fluid for heating the mould (10) according to the stage of the manufacturing cycle.

5. A method according to any one of the preceding claims wherein fluid in the form of oil is used for heating and cooling the surface.

6. A method according to claim 2 or 3 wherein the jacket comprises distribution means (29, 30) for distributing fluid evenly throughout the jacket during the heating and cooling stages.

7. A method according to claim 6 wherein the distribution means includes a pipe or pipes (29, 30) within the jacket (11) having a plurality of outlet openings (22) from which fluid is distributed throughout the jacket.

8. A method according to claim 7 wherein the pipe (21) comprises a continuous serpentine pipe, closed at one end and connected at the other end with sources of hot and cold fluid (27, 28).

9. A method according to claim 7 wherein the pipes include an array of pipes (21) communicating with a common manifold (23).

10. A method according to any one of the preceding claims wherein heating and cooling is effected by a fluid which is kept at an elevated pressure in the range 0.1 - 0.5 bar acting on the mould.

11. A method according to any one of the preceding claims wherein the thermoplastic material (17) is glass fibre or carbon fibre combined with thermoplastic fibre, the fibres being associated with one another and in the form of sheet material which is flexible and when laid onto the mould surface (10A) conforms to the shape of said surface.

12. A method according to claim 11 wherein the thermoplastic composite fabric comprises thermoplastic material selected from polypropylene, polycarbonate, PBT, polyester and/or nylon.

13. A method according to claim 11 or 12 wherein the thermoplastic material is formed of 60% glass fibre to 40% polypropylene.

14. A method according to any one of the preceding claims wherein the flexible cover (18) is selected from rubber sheet, plastics sheet or other flexible material which upon creating the vacuum presses down on the thermoplastic material to cause it to bear on the mould surface (10A) and conform to the shape of the mould surface.

15. A method according to any one of the preceding claims wherein the mould surface (10A) is formed as a metal shell mould.

16. A method according to claim 15 wherein the metal shell mould is made by electroforming.

17. Apparatus for manufacturing articles from thermoplastic material comprising a mould (10) having a surface (10A), a flexible cover (18) arranged for placing over the mould surface with thermoplastic material (17) located between the surface and the cover, a jacket (11) for fluid to the rear of the mould surface and arranged to receive fluid for heating and cooling the mould surface and thermoplastic material, and sources (27, 28) of hot fluid and of cooling fluid communicating with the jacket.

18. Apparatus according to claim 16 wherein the mould (10) is a metal member arranged to transmit heat from fluid in the jacket (11) to the thermoplastic material (17).

19. Apparatus according to claims 16 or 17 wherein the jacket (11) for fluid includes distribution means (29, 30) for distributing fluid, such as oil, throughout the jacket to achieve an even temperature of fluid in the jacket.

20. Apparatus according to claim 18 wherein the distribution means includes pipes (29, 30) extending through the jacket (11) and having a plurality of outlet openings (22).
